# EUROPEAN PATENT SPECIFICATION

(11) **EP 0 987 780 B1**
(45) Date of publication and mention of the grant of the patent: **09.12.2009**
(21) Application number: 99121404.0
(22) Date of filing: 07.03.1997
(51) Int. Cl.: H01M 4/58, H01M 10/40

(54) **Non-aqueous electrolyte battery**
Batterie mit nichtwässrigem Elektrolyt
Batterie à électrolyte non-aqueux

(30) Priority: 27.05.1996 JP 15624496
(43) Date of publication of application: 22.03.2000
(62) Divisional of application: 97103887.2
(73) Proprietor: SANYO ELECTRIC CO., LTD., Moriguchi-shi, Osaka (JP)
(72) Inventor: Kusumoto, Yasuyuki, Hirakata-shi, Osaka (JP); Shoji, Yoshihiro, Hirakata-shi, Osaka (JP); Nohma, Toshiyuki, Hirakata-shi, Osaka (JP); Nishio, Koji, Kirakata-shi, Osaka (JP)
(74) Representative: Glawe, Delfs, Moll

(56) References cited:
- EP-A- 0 495 613
- EP-A- 0 517 070
- EP-A- 0 520 667
- EP-A- 0 549 802
- WO-A-96/04688

## Description

### BACKGROUND OF THE INVENTION

### Field of the Invention

The present invention relates generally to a non-aqueous electrolyte battery comprising a positive electrode, a negative electrode using a carbon material, and a non-aqueous electrolytic solution, and more particularly, to a non-aqueous electrolyte battery whose preservation characteristics and cycle characteristics are improved upon improvement of the negative electrode using the carbon material.

### Description of the Prior Art

In recent years, as one of new-type batteries having high power and high energy density, a high electromotive-force non-aqueous electrolyte battery using a non-aqueous electrolytic solution as an electrolyte and utilizing oxidation and reduction of lithium has been utilized.

In such a non-aqueous electrolyte battery, a carbon material capable of occluding and discharging lithium ions has been conventionally utilized widely as its negative electrode material.

In the case of the non-aqueous electrolyte battery using the carbon material for the negative electrode, lithium contained in the carbon material used for the negative electrode reacts with a solvent or the like in the non-aqueous electrolytic solution at the time of preservation, so that self-discharge is induced, and the non-aqueous electrolytic solution is decomposed. As a result, the battery capacity is gradually decreased, and the cycle characteristics are degraded.

As the carbon material used for the negative electrode as described above, carbon which is not graphitized and graphitized carbon have been conventionally generally used.

When a carbon material having low crystallinity such as carbon which is not graphitized is used, a discharge capacity per unit weight is small, whereby a battery having a sufficient discharge capacity is not obtained. Further, a potential at a negative electrode is gradually increased as discharge is induced, whereby the voltage of the battery is reduced, not to obtain a stable voltage. On the other hand, when a carbon material having high crystallinity such as graphitized carbon is used, a discharge capacity per unit weight is increased. However, a potential at a negative electrode is gradually increased at the end of discharge, whereby a non-aqueous electrolytic solution is decomposed upon reaction on the surface of the carbon material used for the negative electrode, resulting in degraded cycle characteristics.

In the prior art, a non-aqueous electrolyte battery whose cycle characteristics are improved by adding a non-fluorine polymer mainly composed of butadiene and a fluorine polymer as binders to graphite powder, to hold binding power in a depolarizing mix for cell as well as increase binding properties to a copper foil which is a collector has been proposed, as disclosed in Japanese Patent Laid-Open No. 215761/1994.

Even when the non-fluorine polymer mainly composed of butadiene and the fluorine polymer are thus used as binders, however, a non-aqueous electrolytic solution is still decomposed upon reaction on the surface of graphite, so that the cycle characteristics cannot be sufficiently improved.

Furthermore, in the prior art, an aqueous electrolyte battery whose cycle characteristics and preservation characteristics are improved by mixing a whisker such as a silicon carbide whisker, a silicon nitride whisker, or a potassium titanate whisker with powder of an active material such as a carbon material, as disclosed in Japanese Patent Laid-Open No. 302315/1994, and an aqueous electrolyte battery whose collection efficiency is improved using a carbon material obtained by mixing graphite and coke for a negative electrode, as disclosed in Japanese Patent Laid-Open No. 84515/1994, for example, have been also developed.

Also in each of the aqueous electrolyte batteries disclosed in the gazettes, it is impossible to sufficiently prevent self-discharge from being induced upon reaction of lithium in the carbon material used for the negative electrode with a solvent or the like in the non-aqueous electrolytic solution as described above and sufficiently prevent the non-aqueous electrolytic solution from being decomposed, whereby the battery capacity is still reduced at the time of preservation, and the cycle characteristics are still degraded.

### SUMMARY OF THE INVENTION

A first object of the present invention is to provide, in a non-aqueous electrolyte battery comprising a positive electrode, a negative electrode using a carbon material, and a non-aqueous electrolytic solution, the non-aqueous electrolyte battery having good preservation characteristics in which lithium in the carbon material used for the negative electrode hardly reacts with a solvent or the like in the non-aqueous electrolytic solution to induce self-discharge at the time of preservation.

A second object of the present invention is to provide, in the above-mentioned non-aqueous electrolyte battery, a non-aqueous electrolyte lithium battery which is superior in cycle characteristics, and has a sufficient discharge capacity, and causes a stable battery voltage to be obtained by preventing the non-aqueous electrolytic solution from being decomposed upon reaction on the surface of the carbon material due to a rapid increase in a potential at the negative electrode using the carbon material at the end of the discharge.

In a non-aqueous electrolyte battery comprising a positive electrode, a negative electrode using a carbon material, and a non-aqueous electrolytic solution, a first non-aqueous electrolyte battery is characterized in that the carbon material is composed of a core and a surface layer, the core is coated with the surface layer, the core is composed of graphitized carbon in which spacing (d₀₀₂) of lattice planes (002) is in the range of 3.35 to 3.39 Å and the length (Lc) of a crystallite in the direction of the c axis is not less than 1000 Å, and the surface layer is composed of coating graphitized carbon in which spacing (d₀₀₂) of lattice planes (002) is in the range of 3.36 to 3.48 Å and is not less than the spacing (d₀₀₂) of lattice planes (002) in the praphitized carbon to be the core.

When the carbon material obtained by coating the graphitized carbon to be a core with the coating graphitized carbon is used for the negative electrode as in the first non-aqueous electrolyte battery self-discharge is prevented from being induced upon reaction of lithium in the graphitized carbon to be a core with a solvent or the like in the non-aqueous electrolytic solution at the time of preservation by the coating graphitized carbon, whereby the battery capacity is hardly decreased at the time of the preservation, resulting in improved preservation characteristics in the non-aqueous electrolyte battery.

In a non-aqueous electrolyte battery comprising a positive electrode, a negative electrode using a carbon material, and a non-aqueous electrolyte battery, a non-aqueous electrolyte battery according to the present invention is characterized in that the carbon material is composed of a core and a surface layer, the core is coated with the surface layer, the core is composed of graphitized carbon in which spacing (d₀₀₂) of lattice planes (002) is in the range of 3.35 to 3.39 Å, and the surface layer is composed of a calcined product of an organic substance comprised of carbon containing sulfur atoms.

As in the non-aqueous electrolyte battery according to the present invention, when the graphitized carbon in which spacing (d₀₀₂) of lattice planes (002) is in the range of 3.35 to 3.39 Å is coated with the calcined product of the organic substance composed of carbon containing sulfur atoms, lithium contained in a terminal of the graphitized carbon can be prevented from reacting with a solvent or the like in the non-aqueous electrolytic solution in contact therewith at the time of preservation, whereby self-discharge in the non-aqueous electrolyte battery is prevented, resulting in improved preservation characteristics.

In a lithium battery comprising a positive electrode, a negative electrode using a carbon material, and a non-aqueous electrolytic solution, a third non-aqueous electrolyte battery is characterized in that multi-phase graphitized carbon having two or more crystals respectively having different crystallinities in one particle, the length (Lc) of a crystallite in the direction of the c axis in each of the crystals being not less than 10 Å, is used as the carbon material used for the negative electrode.

As in the third non-aqueous electrolyte battery, when the multi-phase graphitized carbon having two or more crystals respectively having different crystallinities in one particle, the length (Lc) of a crystallite in the direction of the c axis in each of the crystals being not less than 10 Å, is used as the carbon material used for the negative electrode, the discharge capacity per unit weight is increased by the crystal having high crystallinity in the carbon material, and the change in a potential at the negative electrode at the end of discharge becomes gradual by the crystal having low crystallinity. As a result, the non-aqueous electrolytic solution is also prevented from being decomposed upon reaction with the carbon material used for the negative electrode due to the rapid increase in the potential at the negative electrode at the end of the discharge as in the prior art, resulting in improved cycle characteristics in the non-aqueous electrolyte battery.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a sectional illustration showing the internal construction of non-aqueous electrolyte batteries in embodiments and comparative examples of the present invention;
Fig. 2 is a diagram showing the relationship between the amount of coating graphitized carbon with which graphitized carbon to be a core is coated and a discharge capacity after preservation in an experimental example 1;
Fig. 3 is a diagram showing the relationship between spacing (d₀₀₂) of lattice planes (002) in coating graphitized carbon with which graphitized carbon to be a core is coated and a discharge capacity after preservation in an experimental example 2;
Fig. 4 is a diagram showing the relationship between the amount of a calcined product of an organic substance composed of carbon containing sulfur atoms with which graphitized carbon is coated and a discharge capacity after preservation in an experimental example 3;
Fig. 5 is a diagram showing the relationship between the ratio of sulfur atoms to carbon atoms in a calcined product of an organic substance with which graphitized carbon is coated and a discharge capacity after preservation in an experimental example 4; and
Fig. 6 is a diagram showing the relationship between a discharge capacity and a battery voltage in each of non-aqueous electrolyte secondary batteries in experimental examples 5 to 11 and comparative examples 17 to 23.

### PREFERRED EMBODIMENTS OF THE PRESENT INVENTION

Description is now made of preferred embodiments of first to third non-aqueous electrolyte batteries in the present invention.

The reason why in the first non-aqueous electrolyte battery, graphitized carbon in which spacing (d₀₀₂) of lattice planes (002) is in the range of 3.35 to 3.39 Å and the length (Lc) of a crystallite in the direction of the c axis is not less than 1000 Å is used as graphitized carbon to be a core of a carbon material used for its negative electrode is that such graphitized carbon is high in crystallinity and sufficiently occludes and discharges lithium ions, so that a large-capacity battery is obtained. Natural graphite is generally used as such graphitized carbon.

On the other hand, graphitized carbon in which spacing (d₀₀₂) of lattice planes (002) is in the range of 3.36 to 3.48 Å and is not less than the spacing (d₀₀₂) of lattice planes (002) in the graphitized carbon to be a core is used as coating graphitized carbon with which the graphitized carbon to be a core is to be coated in order to sufficiently prevent lithium in the graphitized carbon to be a core from reacting with a solvent or the like in a non-aqueous electrolytic solution. Artificial graphite is generally used as such coating graphitized carbon.

In coating the graphitized carbon to be a core with the coating graphitized carbon, if the amount of the coating graphitized carbon is small, the graphitized carbon to be a core cannot be sufficiently coated, so that lithium contained in the graphitized carbon to be a core cannot be sufficiently prevented from reacting with the solvent or the like in the non-aqueous electrolytic solution. On the other hand, if the amount thereof is too large, the amount of the graphitized carbon to be a core is decreased, so that the capability to occlude and discharge lithium ions at the negative electrode is decreased. Therefore, the amount of the coating graphitized carbon is set in the range of 0.1 to 60 % by weight, preferably in the range of 1 to 50 % by weight, and more preferably in the range of 10 to 30 % by weight per the total amount of the graphitized carbon and the coating graphitized carbon.

The reason why in the above-mentioned second non-aqueous electrolyte battery, graphitized carbon in which spacing (d₀₀₂) of lattice planes (002) is in the range of 3.35 to 3.39 Å is used as a carbon material used for its negative electrode is that such graphitized carbon is high in crystallinity and sufficiently occludes and discharges lithium ions, so that a large-capacity battery is obtained, as in the case of the above-mentioned first non-aqueous electrolyte battery. Natural graphite is generally used.

On the other hand, in the second non-aqueous electrolyte battery, it is possible to use, as a calcined product of an organic substance composed of carbon containing sulfur atoms with which the surface of the graphitized carbon is to be coated, one obtained by calcining and graphitizing a pyrolytic product of an organic substance containing sulfur, for example, tar or pitch at temperatures in the vicinity of 2700 to 3000°C.

In coating the graphitized carbon with the calcined product of the organic substance, if the amount of the calcined product of the organic substance is small, the graphitized carbon cannot be sufficiently coated, so that lithium contained in the graphitized carbon cannot be sufficiently prevented from reacting with a solvent or the like in a non-aqueous electrolytic solution. On the other hand, if the amount of the calcined product of the organic substance is too large, the amount of the graphitized carbon used for the negative electrode is decreased, whereby the capability to occlude and discharge lithium ions at the negative electrode is decreased. Therefore, the amount of the calcined product of the organic substance is set in the range of 0.1 to 50 % by weight, preferably in the range of 5 to 40 % by weight, and more preferably in the range of 15 to 25 % by weight per the total amount of the graphitized carbon and the calcined product of the organic substance.

Furthermore, if the amount of the sulfur atoms contained in the calcined product of the organic substance is small, it is impossible to sufficiently prevent the reaction between lithium contained in the graphitized carbon and the solvent or the like in the non-aqueous electrolytic solution. On the other hand, if the amount of the sulfur atoms is too large, the characteristics as a negative electrode material are decreased. Therefore, the ratio of the sulfur atoms to carbon atoms in the calcined product of the organic substance is set in the range of 0.01 to 20 %, preferably 1 to 10 %, and more preferably 5 to 7 % by weight.

Furthermore, in each of the first to third non-aqueous electrolyte batteries it is possible to use, as a positive electrode material used for its positive electrode, a known positive electrode material capable of occluding and discharging lithium ions which has been conventionally used. For example, a lithium transition metal composite oxide containing at least one of manganese, cobalt, nickel, iron, vanadium, and niobium can be used. Specifically, a known material such as LiCoO₂, LiNiO₂, LiMnO₂, or LiFeO₂ can be used.

Furthermore, it is possible to use, as the non-aqueous electrolytic solution used in each of the first to third non-aqueous electrolyte batteries, a known non-aqueous electrolytic solution which has been conventionally used.

As the solvent in the non-aqueous electrolytic solution, organic solvents such as ethylene carbonate, propylene carbonate, butylene carbonate, vinylene carbonate, cyclopentanone, sulfolane, dimethylsulfolane, 3-methyl-1, 3-oxazolidine-2-on, γ-buthyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1, 2-dimethoxyethane, tetrahydrofuran, 2-methyltetrahydrofuran, 1,3-dioxolane, methyl acetate, and ethyl acetate can be used independently or in combination.

Furthermore, in the non-aqueous electrolytic solution, lithium compounds such as LiPF₆, LiBF₄, LiClO₄, LiCF₃SO₃, LiAsF₆, LiN(CF₃SO₂)₂, LiOSO₂ and (CF₂)₃CF₃ can be used as a solute dissolved in the above-mentioned solvent.

The above-mentioned first to third non-aqueous electrolyte batteries will be described by taking more specific embodiments, and it will be made apparent that the non-aqueous electrolyte batteries according to the embodiment are superior in preservation characteristics, cycle characteristics and the like by taking comparative examples.

### (Embodiment 1) (not invention)

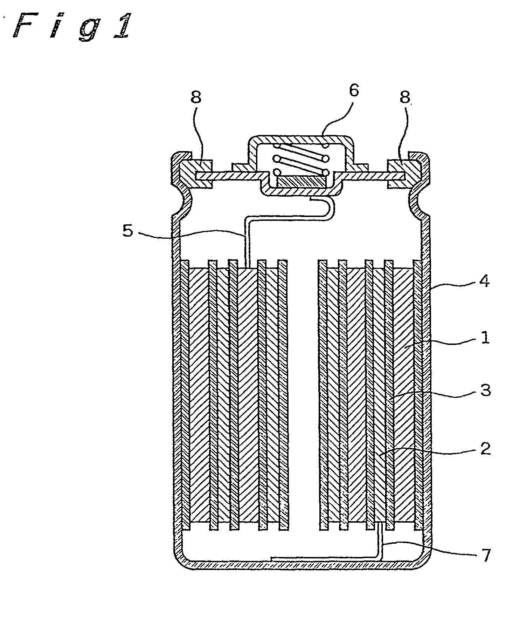

In the present embodiment, a positive electrode and a negative electrode produced in the following manner were used, and a non-aqueous electrolytic solution prepared in the following manner was used, to fabricate a cylindrical-type non-aqueous electrolyte secondary battery as shown in Fig. 1.

### [Production of positive electrode]

In producing a positive electrode, lithium-containing cobalt dioxide LiCoO₂ heat-treated at a temperature of 800°C was used as a positive electrode material. The heat treatment can be carried out at temperatures in the range of 700 to 900°C.

The positive electrode material LiCoO₂, carbon powder which is a conductive agent, fluorocarbon polymer powder which is a binding agent were mixed in the weight ratio of 85 : 10 : 5. A mixture obtained was applied to an aluminum foil composing a positive electrode-side collector, after which the mixture was heat-treated at a temperature of 150°C, to produce the positive electrode. The heat treatment can be carried out at temperatures in the range of 100 to 200°C.

### [Production of negative electrode]

In producing a negative electrode, a material obtained by coating graphitized carbon to be a core in which spacing (d₀₀₂) of lattice planes (002) is 3.36 Å and the length (Lc) of a crystallite in the direction of the c axis is 2100 Å with coating graphitized carbon in which spacing (d₀₀₂) of lattice planes (002) is 3.40 Å so that the amount of the coating graphitized carbon is 20 % by weight per the total amount of the graphitized carbon and the coating graphitized carbon was used as a negative electrode material. The negative electrode material and polyvinylidene fluoride which is a binding agent were mixed in the weight ratio of 95 : 5, and a mixture obtained was applied to a negative electrode-side collector composed of a copper foil, after which the mixture was heat-treated at a temperature of 200°C, to produce the negative electrode. The heat treatment can be carried out at temperatures in the range of 150 to 250°C.

### [Preparation of Non-aqueous Electrolytic Solution]

In preparing a non-aqueous electrolytic solution, a mixed solvent obtained by mixing ethylene carbonate and 1, 2-dimethoxyethane in the volume ratio of 1 : 1 was used, and lithium hexafluorophosphate LiPF₆ was dissolved as a solute in the mixed solvent in the ratio of 1 mol/1, to prepare the non-aqueous electrolytic solution.

### [Production of Battery]

In fabricating the non-aqueous electrolyte secondary battery according to the present embodiment, a microporous film made of polypropylene having permeability to lithium ions was interposed as a separator 3 between a positive electrode 1 and a negative electrode 2 produced in the above-mentioned manner, and they were contained upon being wound in a spiral shape in a battery can 4, after which the non-aqueous electrolytic solution was poured in the battery can 4 and the battery can 4 was sealed, and the positive electrode 1 was connected to a positive electrode outer terminal 6 through an positive electrode lead 5 and the negative electrode 2 was connected to the battery can 4 through a negative electrode lead 7, to electrically separate the battery can 4 and the positive electrode outer terminal 6 from each other by an insulating packing 8.

### (Comparative Examples 1 to 4)

In the comparative examples, non-aqueous electrolyte secondary batteries were fabricated in the same manner as that in the embodiment 1 except that only the negative electrode material used was changed in the production of the negative electrode in the non-aqueous electrolyte secondary battery in the embodiment 1.

In the comparative example 1, only the graphitized carbon to be a core used in the embodiment 1 was used as the negative electrode material. In the comparative example 2, a material obtained by coating the graphitized carbon to be a core with 20 % by weight of a silicon nitride whisker was used as the negative electrode material. In the comparative example 3, a material obtained by coating the graphitized carbon to be a core with 20 % by weight of coke in which spacing (d₀₀₂) of lattice planes (002) is 3.46 to 3.48 Å and the length (Lc) of a crystallite in the direction of the c axis is 15 to 20 Å was used as the negative electrode material. In the comparative example 4, a material obtained by coating the graphitized carbon to be a core with 20 % by weight of amorphous carbon composed of a carbide of 3, 5-dimethyl phenol formaldehyde resin was used as the negative electrode material.

Each of the non-aqueous electrolyte secondary batteries in the embodiment 1 and the comparative examples 1 to 4 fabricated in the above-mentioned manner was discharged to a final discharge voltage of 2.75 V at a discharge current of 200 mA before preservation and after preservation for two months at a temperatures of 60 °C, respectively, to measure discharge capacities before the preservation and after the preservation, to find the self-discharge rate (%) of the non-aqueous electrolyte secondary battery after the preservation for two months in the above-mentioned manner. The results are shown in the following Table 1.

**Table 1**

| | embodiment 1 | comparative example | | | |
|---|---|---|---|---|---|
| | | 1 | 2 | 3 | 4 |
| self-discharge rate (%) | 7.1 | 12.4 | 12.1 | 11.3 | 11.1 |

As a result, the non-aqueous electrolyte secondary battery in the embodiment 1 in which the graphitized carbon to be a core is coated with the coating graphitized carbon was lower in the self-discharge rate than the non-aqueous electrolyte secondary battery in the comparative example 1 in which the graphitized carbon to be a core is not coated and the non-aqueous electrolyte secondary batteries in the comparative examples 2 to 4 in which the graphitized carbon to be a core is coated with the silicon nitride whisker, the coke and the carbide of 3, 5-dimethyl phenol formaldehyde resin.

### (Embodiment 2) (not invention)

In the embodiment, a non-aqueous electrolyte secondary battery was fabricated in the same manner as that in the above-mentioned embodiment 1 except that a mixed solvent obtained by mixing propylene carbonate and 1, 2-dimethoxyethane in the volume ratio of 1 : 1 was used as a solvent in the preparation of the non-aqueous electrolytic solution in the non-aqueous electrolyte secondary battery in the embodiment 1.

### (Comparative Examples 5 to 8)

In the comparative examples, non-aqueous electrolyte secondary batteries were fabricated in the same manner as that in the above-mentioned embodiment 1 except that a mixed solvent obtained by mixing propylene carbonate and 1, 2-dimethoxyethane in the volume ratio of 1 : 1 was used as in the above-mentioned embodiment 2 as a solvent in a non-aqueous electrolytic solution, and only graphitized carbon to be a core as in the above-mentioned comparative example 1, a material obtained by coating graphitized carbon to be a core with a silicon nitride whisker as in the above-mentioned comparative example 2, a material obtained by coating graphitized carbon to be a core with coke as in the above-mentioned comparative example 3, and a material obtained by coating graphitized carbon to be a core with a carbide of 3, 5-dimethyl phenol formaldehyde resin as in the above-mentioned comparative example 4 were respectively used as negative electrode materials in the comparative example 5, the comparative example 6, the comparative example 7, and the comparative example 8.

With respect to each of the non-aqueous electrolyte secondary batteries in the embodiment 2 and the comparative examples 5 to 8 fabricated in the above-mentioned manner, discharge capacities before preservation and after preservation for two months at a temperature of 60°C were also measured in the same manner as the foregoing, to find the self-discharge rate (%) of the non-aqueous electrolyte secondary battery after the preservation for two months. The results are shown in the following Table 2.

**Table 2**

| | embodiment 2 | comparative example | | | |
|---|---|---|---|---|---|
| | | 5 | 6 | 7 | 8 |
| self-discharge rate (%) | 7.3 | 12.6 | 12.4 | 11.6 | 11.3 |

As a result, even when the type of the solvent used in the non-aqueous electrolytic solution was changed, the non-aqueous electrolyte secondary battery in the embodiment 2 in which the graphitized carbon to be a core is coated with the coating graphitized carbon was lower in the self-discharge rate than the non-aqueous electrolyte secondary batteries in the comparative examples 5 to 8, as in the case of the embodiment 1 and the comparative examples 1 to 4.

### (Experimental Example 1)

In the experimental example, in coating the graphitized carbon to be a core with the coating graphitized carbon in the production of the negative electrode in the non-aqueous electrolyte secondary battery in the embodiment 1, the amount of the coating graphitized carbon was changed in the range of 0 to 70 % by weight as shown in the following Table 3 per the total amount of the graphitized carbon and the coating graphitized carbon, to fabricate respective non-aqueous electrolyte secondary batteries.

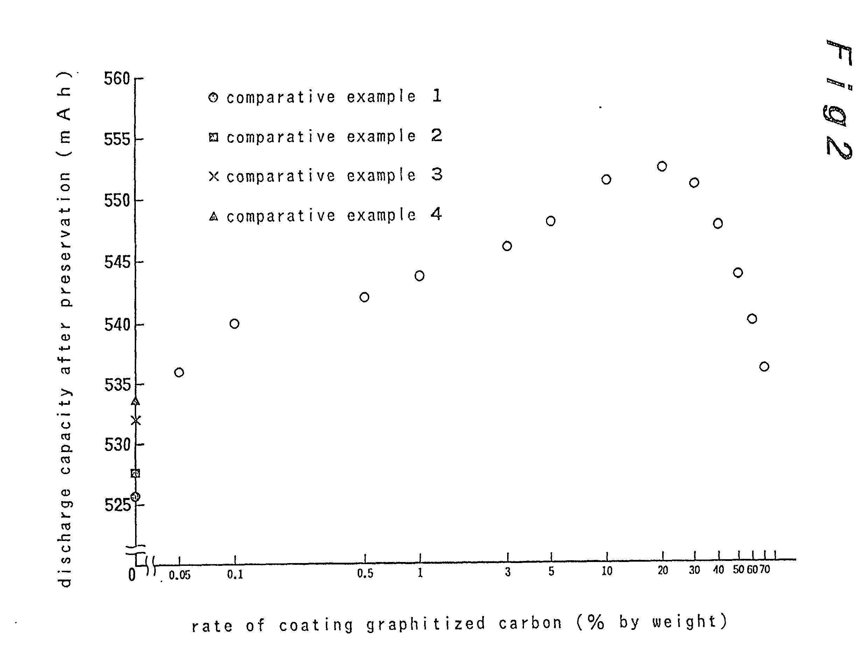

Each of the non-aqueous electrolyte secondary batteries was preserved for two months at a temperature of 60°C, and was then discharged to a final discharge voltage of 2.75 V at a discharge current of 200 mA as described above, to examine a discharge capacity in the non-aqueous electrolyte secondary battery after the preservation. The results are shown in the following Table 3 and Fig. 2. A discharge capacity before the preservation in the non-aqueous electrolyte secondary battery was 600 mAh.

**Table 3**

| | | | | | | | |
|---|---|---|---|---|---|---|---|
| coating amount (% by weight) | 0 | 0.05 | 0.1 | 0.5 | 1 | 3 | 5 |
| discharge capacity (mAh) | 526 | 536 | 540 | 542 | 544 | 546 | 548 |
| coating amount (% by weight) | 10 | 20 | 30 | 40 | 50 | 60 | 70 |
| discharge capacity (mAh) | 551 | 557 | 551 | 548 | 544 | 540 | 536 |

As a result, the non-aqueous electrolyte secondary battery in which the graphitized carbon to be a core is coated with the coating graphitized carbon was significantly improved in the discharge capacity after the preservation, as compared with the non-aqueous electrolyte secondary battery in which the graphitized carbon to be a core is not coated. When the graphitized carbon to be a core was coated with the coating graphitized carbon, the decrease in the discharge capacity after the preservation was reduced when the amount of the coating graphitized carbon was in the range of 0.1 to 60 % by weight, preferably in the range of 1 to 50 % by weight, and more preferably in the range of 10 to 30 % by weight per the total amount of the graphitized carbon and the coating graphitized carbon, whereby a non-aqueous electrolyte secondary battery superior in preservation characteristics was obtained.

### (Experimental Example 2)

In the experimental example, in coating the graphitized carbon to be a core with the coating graphitized carbon in the production of the negative electrode in the non-aqueous electrolyte secondary battery in the embodiment 1, coating graphitized carbons in which spacing (d₀₀₂) of lattice planes (002) is in the range of 3.36 to 3.49 Å as shown in the following Table 4 were used as the coating graphitized carbon, to fabricate respective non-aqueous electrolyte secondary batteries.

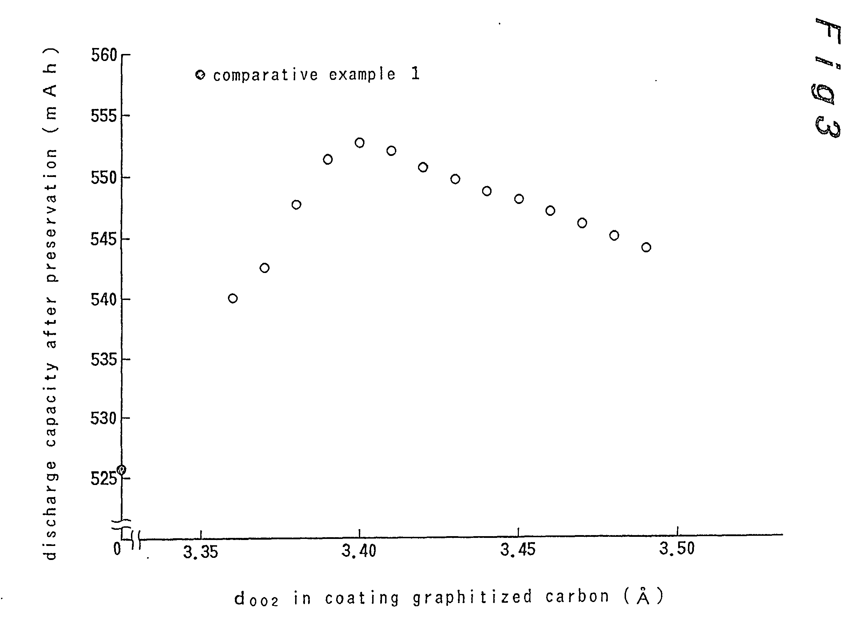

With respect to each of the non-aqueous electrolyte secondary batteries, a discharge capacity after preservation for two months at a temperature of 60°C in the non-aqueous electrolyte battery was also examined in the same manner as that in the above-mentioned experimental example 1. The results are shown in the following Table 4 and Fig. 3. A discharge capacity before the preservation in the non-aqueous electrolyte secondary battery was 600 mAh.

**Table 4**

| | | | | | | | |
|---|---|---|---|---|---|---|---|
| d₀₀₂(Å) in coating graphitized carbon | 3.36 | 3.37 | 3.38 | 3.39 | 3.40 | 3.41 | 3.42 |
| discharge capacity (mAh) | 540 | 543 | 548 | 551 | 553 | 552 | 551 |
| d₀₀₂(Å) in coating graphitized carbon | 3.43 | 3.44 | 3.45 | 3.46 | 3.46 | 3.48 | 3.49 |
| discharge capacity (mAh) | 550 | 549 | 548 | 547 | 546 | 545 | 544 |

As a result, in coating the graphitized carbon to be a core in which spacing (d₀₀₂) of lattice planes (002) is 3.36 Å with the coating graphitized carbon as described above, when the graphitized carbon to be a core was coated with the coating graphitized carbon in which spacing (d₀₀₂) of lattice planes (002) is in the range of 3.36 to 3.49 Å and is not less than the spacing (d₀₀₂) of lattice planes (002) in the graphitized carbon to be a core, the discharge capacity after the preservation was significantly improved, as compared with that in a case where the graphitized carbon to be a core is not coated.

### (Embodiment 3) (invention)

In the present embodiment, a positive electrode and a negative electrode produced in the following manner were used, and a non-aqueous electrolytic solution prepared in the following manner was used, to fabricate a cylindrical-type non-aqueous electrolyte secondary battery as shown in Fig. 1 in the same manner as that in the above-mentioned embodiment 1.

### [Production of positive electrode]

In producing a positive electrode, lithium-containing cobalt dioxide LiCoO₂ heat-treated at a temperature of 800°C was used as a positive electrode material. The heat treatment can be carried out at temperatures in the range of 700 to 900°C.

The positive electrode material LiCoO₂, carbon powder which is a conductive agent, fluorocarbon polymer powder which is a binding agent were mixed in the weight ratio of 85 : 10 : 5. A mixture obtained was applied to a positive electrode-side collector composed of an aluminum foil, after which the mixture was heat-treated at a temperature of 150°C, to produce the positive electrode. The heat treatment can be carried out at temperatures in the range of 100 to 200°C.

### [Production of negative electrode]

In producing a negative electrode, a material obtained by coating graphitized carbon in which spacing (d₀₀₂) of lattice planes (002) is in the range of 3.35 to 3.39 Å with 20 % by weight of a calcined product of an organic substance in which the ratio of sulfur atoms to the number of carbon atoms is 6 % was used as a negative electrode material, the negative electrode material and polyvinylidene fluoride which is a binding agent were mixed in the weight ratio of 95 : 5, and a mixture obtained was applied to a negative electrode-side collector composed of a copper foil, after which the mixture was heat-treated at a temperature of 200°C, to produce the negative electrode. The heat treatment can be carried out at temperatures in the range of 150 to 250°C.

### [Preparation of Non-aqueous Electrolytic Solution]

In preparing a non-aqueous electrolytic solution, a mixed solvent obtained by mixing ethylene carbonate and 1, 2-dimethoxyethane in the volume ratio of 1 : 1 was used, and lithium hexafluorophosphate LiPF₆ was dissolved as a solute in the mixed solvent in the ratio of 1 mol/1, to prepare the non-aqueous electrolytic solution.

### (Comparative Examples 9 to 12)

In the comparative examples, non-aqueous electrolyte secondary batteries were fabricated in the same manner as that in the above-mentioned embodiment 3 except that only the negative electrode material used was changed in the production of the negative electrode in the non-aqueous electrolyte secondary battery in the embodiment 3.

Only graphitized carbon used in the embodiment 1, a material obtained by coating the graphitized carbon with 20 % by weight of a silicon nitride whisker, a material obtained by coating the graphitized carbon with 20 % by weight of coke in which spacing (d₀₀₂) of lattice planes (002) is 3.46 to 3.48 Å and the length (Lc) of a crystallite in the direction of the c axis is 10 to 20 Å, and a material obtained by coating the graphitized carbon with 20 % by weight of a carbide of 3, 5-dimethyl phenol formaldehyde resin were respectively used as negative electrode materials in the comparative example 9, the comparative example 10, the comparative example 11, and the comparative example 12.

Each of the non-aqueous electrolyte secondary batteries in the embodiment 3 and the comparative examples 9 to 12 fabricated using the above-mentioned negative electrode materials was discharged to a final discharge voltage of 2.75 V at a discharge current of 200 mA, respectively, before preservation and after preservation for two months at a temperatures of 60°C to measure discharge capacities before the preservation and after the preservation, to find the self-discharge rate (%) of the non-aqueous electrolyte secondary battery after the preservation for two months in the above-mentioned manner. The results are shown in the following Table 1.

**Table 5**

| | embodiment 3 | comparative example | | | |
|---|---|---|---|---|---|
| | | 9 | 10 | 11 | 12 |
| self-discharge rate (%) | 3.1 | 12.4 | 12.1 | 11.3 | 11.1 |

As a result, the non-aqueous electrolyte secondary battery in the embodiment 3 in which the graphitized carbon is coated with the calcined product of the organic substance composed of carbon containing sulfur atoms was much lower in the self-discharge rate than the non-aqueous electrolyte secondary battery in the comparative example 9 in which the graphitized carbon is not coated and the non-aqueous electrolyte secondary batteries in the comparative examples 10 to 12 in which the graphitized carbon is coated with the silicon nitride whisker, the coke and the calcined product of the organic substance containing no sulfur atoms.

### (Embodiment 4) (invention)

In the embodiment, a non-aqueous electrolyte secondary battery was fabricated in the same manner as that in the above-mentioned embodiment 3 except that a mixed solvent obtained by mixing propylene carbonate and 1, 2-dimethoxyethane in the volume ratio of 1 : 1 was used as a solvent in the production of the non-aqueous electrolytic solution in the non-aqueous electrolyte secondary battery in the embodiment 3.

### (Comparative Examples 13 to 16)

In the comparative examples, non-aqueous electrolyte secondary batteries were fabricated in the same manner as that in the above-mentioned embodiment 3 except that a mixed solvent obtained by mixing propylene carbonate and 1, 2-dimethoxyethane in the volume ratio of 1 : 1 was used as in the above-mentioned embodiment 4 as a solvent in a non-aqueous electrolytic solution, and only graphitized carbon as in the above-mentioned comparative example 9, a material obtained by coating graphitized carbon with a silicon nitride whisker as in the above-mentioned comparative example 10, a material obtained by coating graphitized carbon with coke as in the above-mentioned comparative example 11, and a material obtained by coating graphitized carbon with a carbide of 3, 5-dimethyl phenol formaldehyde resin as in the above-mentioned comparative example 12 were respectively used as negative electrode materials in the comparative example 13, the comparative example 14, the comparative example 15, and the comparative example 16.

With respect to each of the non-aqueous electrolyte secondary batteries in the embodiment 4 and the comparative examples 13 to 16 fabricated in the above-mentioned manner, discharge capacities before preservation and after preservation for two months at a temperature of 60°C were measured in the same manner as the foregoing, to find the self-discharge rate (%) of the non-aqueous electrolyte secondary battery after the preservation for two months. The results are shown in the following Table 6.

**Table 6**

| | embodiment 4 | comparative example | | | |
|---|---|---|---|---|---|
| | | 13 | 14 | 15 | 16 |
| self-discharge rate (%) | 3.2 | 12.6 | 12.4 | 11.7 | 11.3 |

As a result, even when the type of the solvent used in the non-aqueous electrolytic solution was changed, the non-aqueous electrolyte secondary battery in the embodiment 4 in which the graphitized carbon is coated with carbon containing sulfur atoms was much lower in the self-discharge rate than the non-aqueous electrolyte secondary batteries in the comparative examples 13 to 16, as in the case of the embodiment 3 and the comparative examples 9 to 12.

### (Experimental Example 3)

In the experimental example, in coating the graphitized carbon with the calcined product of the organic substance composed of carbon containing sulfur atoms in the production of the negative electrode in the non-aqueous electrolyte secondary battery in the embodiment 3, the amount of the calcined product of the organic substance was changed in the range of 0 to 55 % by weight as shown in the following Table 7 per the total amount of the graphitized carbon and the calcined product of the organic substance, to fabricate respective non-aqueous electrolyte secondary batteries.

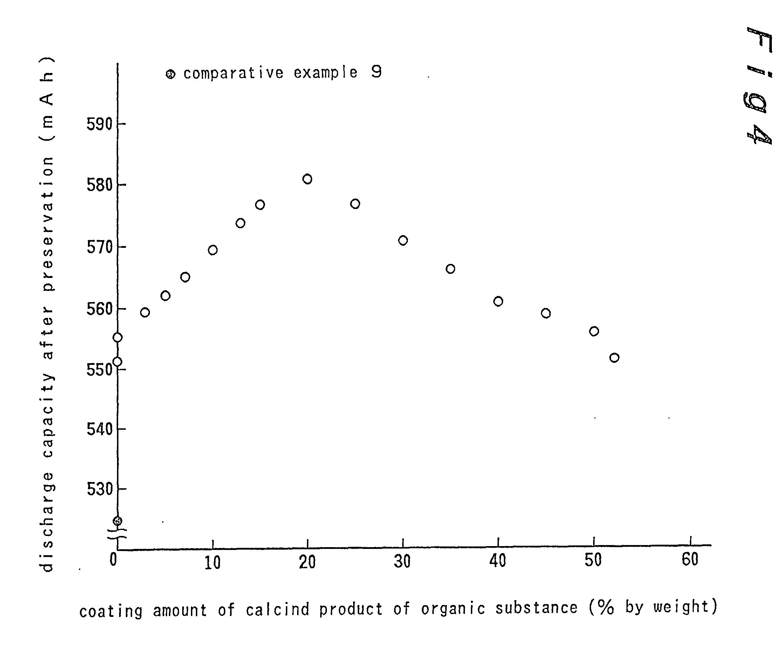

Each of the non-aqueous electrolyte secondary batteries thus fabricated was preserved for two months at a temperature of 60°C, and was then discharged to a final discharge voltage of 2.75 V at a discharge current of 200 mA as described above, to examine a discharge capacity in the non-aqueous electrolyte secondary battery after the preservation. The results are shown in the following Table 7 and Fig. 4. A discharge capacity before the preservation in the non-aqueous electrolyte secondary battery was 600 mAh.

**Table 7**

| | | | | | | | | | |
|---|---|---|---|---|---|---|---|---|---|
| coating amount (% by weight) | 0 | 0.05 | 0.1 | 3 | 5 | 7 | 10 | 13 | 15 |
| discharge capacity (mAh) | 526 | 551 | 556 | 559 | 562 | 565 | 569 | 573 | 577 |
| coating amount (% by weight) | 20 | 25 | 30 | 35 | 40 | 45 | 50 | 55 | |
| discharge capacity (mAh) | 581 | 577 | 571 | 566 | 562 | 558 | 556 | 551 | |

As a result, the non-aqueous electrolyte secondary battery in which the graphitized carbon is coated with the calcined product of the organic substance composed of carbon containing sulfur atoms as described above was significantly improved in the discharge capacity after the preservation, as compared with the non-aqueous electrolyte secondary battery in which the graphitized carbon is not coated in the comparative example 9. When the graphitized carbon was coated with the calcined product of the organic substance composed of carbon containing sulfur atoms, the decrease in the discharge capacity after the preservation was reduced when the amount of the calcined product of the organic substance was in the range of 0.1 to 50 % by weight, preferably in the range of 5 to 40 % by weight, and more preferably in the range of 15 to 25 % by weight per the total amount of the graphitized carbon and the calcined product of the organic substance, whereby a non-aqueous electrolyte secondary battery superior in preservation characteristics was obtained.

### (Experimental Example 4)

In the experimental example, in coating the graphitized carbon with the calcined product of the organic substance composed of carbon containing sulfur atoms in the production of the negative electrode in the non-aqueous electrolyte secondary battery in the embodiment 3, examples of the calcined product of the organic substance were ones which differ in the ratio of the number of sulfur atoms to the number of carbon atoms, and the graphitized carbon was coated with 20 % by weight of the respective calcined products of the organic substances which differ in the ratio of the number of the sulfur atoms, to fabricate respective non-aqueous electrolyte secondary batteries.

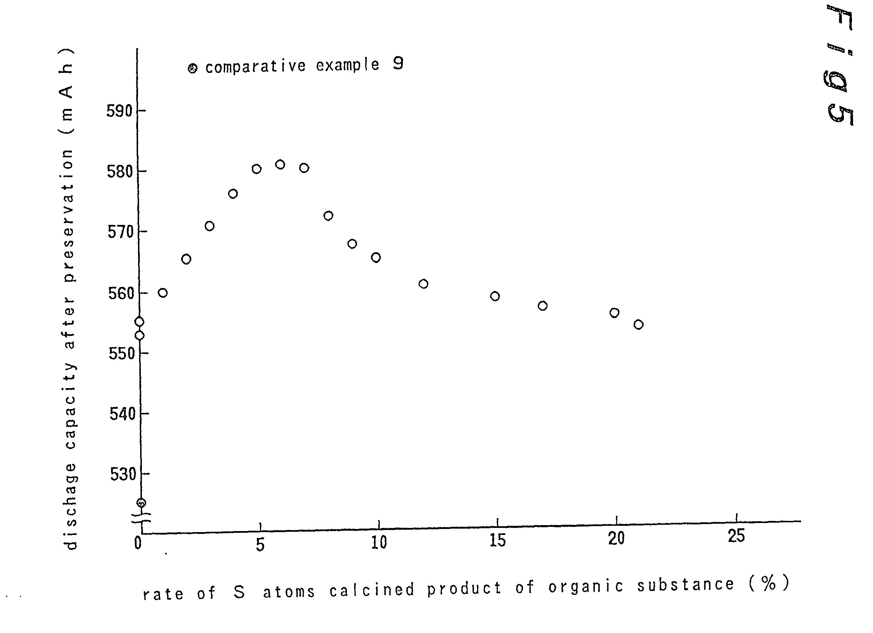

With respect to each of the non-aqueous electrolyte secondary batteries thus fabricated, a discharge capacity after preservation for two months at a temperature of 60°C in the non-aqueous electrolyte battery was also examined in the same manner as that in the above-mentioned experimental example 3. The results are shown in Fig. 5. A discharge capacity before the preservation in the non-aqueous electrolyte secondary battery was 600 mAh.

As a result, when the graphitized carbon was coated with the calcined product of the organic substance composed of carbon containing sulfur atoms, the discharge capacity after the preservation was significantly improved, as compared with that in the comparative example 9 in which the graphitized carbon is not coated. When the graphitized carbon was coated with the calcined product of the organic substance composed of carbon containing sulfur ions, the decrease in the discharge capacity after the preservation was reduced when the ratio of the number of sulfur atoms to the number of carbon atoms in the calcined product of the organic substance was in the range of 0.01 to 20 %, preferably in the range of 1 to 10 %, and more preferably in the range of 5 to 7 %, whereby a non-aqueous electrolyte secondary battery superior in preservation characteristics was obtained.

### (Embodiment 5) (not invention)

In the present embodiment, a positive electrode and a negative electrode produced in the following manner were used, and a non-aqueous electrolytic solution prepared in the following manner was used, to fabricate a cylindrical-type non-aqueous electrolyte secondary battery as shown in Fig. 1 in the same manner as that in the above-mentioned embodiment 1.

### [Production of positive electrode]

In producing a positive electrode, lithium-containing cobalt dioxide LiCoO₂ heat-treated at a temperature of approximately 850°C was used as a positive electrode material. The positive electrode material LiCoO₂, carbon powder which is a conductive agent, and fluorocarbon polymer powder which is a binding agent were mixed in the weight ratio of 85 : 10 : 5 in water. A mixture obtained was brought into a slurry, and the slurry was applied to a collector composed of an aluminum foil having a thickness of 12 µm, after which the slurry was heat-treated at temperatures of 100 to 150°C, to produce the positive electrode.

### [Production of negative electrode]

In producing a negative electrode, a carbide of phenol resin was heat-treated for one hour at a temperature of 1700°C in a nitrogen atmosphere under high pressure of 0.5 GPa using a high-pressure electric furnace, to obtain a carbon material used for the negative electrode.

When the carbon material was analyzed by an X-ray diffraction method. In this case, peaks were respectively observed at positions of 26.6° and 26° in a diffraction pattern of a lattice plane (002) and observed at positions of 54.6° and 53.5° in a diffraction pattern of a lattice plane (004). As can be seen from the results of the measurement, the carbon material had a two-phase graphite structure having two different crystallinities in one particle because spacing (d₀₀₂) of lattice planes (002) in the carbon material took two different values of 3.36 Å and 3.43 Å.

Furthermore, in the carbon material having the two-phase graphite structure having two different crystallinities, the length (Lc) of a crystallite in the direction of the c axis was found. As a result, the length (Lc) was 500Å in a portion having high crystallinity, and was 20 Å in a portion having low crystallinity.

The above-mentioned carbon material having the two-phase graphite structure, a binding agent composed of styrene-butadiene rubber, and a thickening agent composed of carboxymethylcellulose were mixed in the weight ratio of 98.5 : 0.5 : 1, and 1.8 kg of water was added to 1 kg of a mixture obtained, and the mixture was kneaded for one hour to be brought into a slurry, after which the slurry was applied to a collector composed of a copper foil having a thickness of 18 µm, and was then heat-treated at temperatures of 150 to 200°C, to produce the negative electrode.

### [Preparation of Non-aqueous Electrolytic Solution]

In preparing a non-aqueous electrolytic solution, 1 mol/l of lithium hexafluorophosphate LiPF₆ was dissolved as a solute in a mixed solvent obtained by mixing ethylene carbonate and diethyl carbonate in the volume ratio of 1 : 1, to prepare the non-aqueous electrolytic solution.

### (Embodiment 6) (not invention)

In the present embodiment, a non-aqueous electrolyte secondary battery was fabricated in the same manner as that in the above-mentioned embodiment 5 except that in obtaining a carbon material used for a negative electrode, a carbide of polyvinylidene chloride was heat-treated for one hour at a temperature of 1500°C in a nitrogen atmosphere under high pressure of 0.3 GPa using a high-pressure electric furnace, and a carbon material thus obtained was used for a negative electrode in the production of the negative electrode in the non-aqueous electrolyte secondary battery in the embodiment 5.

The above-mentioned carbon material was analyzed by an X-ray diffraction method in the same manner as that in the embodiment 1. In this case, spacing (d₀₀₂) of lattice planes (002) took two different values of 3.36 Å and 3.42 Å, the carbon material also had a two-phase graphite structure having two different crystallinities in one particle, and the length (Lc) of a crystallite in the direction of the c axis was 400 Å in a portion having high crystallinity and was 11 Å in a portion having low crystallinity.

### (Embodiment 7)

In the present embodiment, a non-aqueous electrolyte secondary battery was fabricated in the same manner as that in the above-mentioned embodiment 5 except that in obtaining a carbon material used for a negative electrode, a carbide of sugar was heat-treated for one hour at a temperature of 1900°C in a nitrogen atmosphere under high pressure of 0.7 GPa using a high-pressure electric furnace, and a carbon material thus obtained was used for a negative electrode in the production of the negative electrode in the non-aqueous electrolyte secondary battery in the embodiment 5.

The above-mentioned carbon material was analyzed by an X-ray diffraction method in the same manner as that in the embodiment 5. In this case, spacing (d₀₀₂) of lattice planes (002) took two different values of 3.35 Å and 3.40 Å, the carbon material had a two-phase graphite structure having two different crystallinities in one particle, and the length (Lc) of a crystallite in the direction of the c axis was 600 Å in a portion having high crystallinity and 30 Å in a portion having low crystallinity.

### (Embodiment 8) (not invention)

In the present embodiment, a non-aqueous electrolyte secondary battery was fabricated in the same manner as that in the above-mentioned embodiment 5 except that in obtaining a carbon material used for a negative electrode, charcoal was heat-treated for one hour at a temperature of 2500°C in a nitrogen atmosphere under atmospheric pressure using an electric furnace, and a carbon material thus obtained was used for a negative electrode in the production of the negative electrode in the non-aqueous electrolyte secondary battery in the embodiment 5.

The above-mentioned carbon material was analyzed by an X-ray diffraction method in the same manner as that in the embodiment 5. In this case, spacing (d₀₀₂) of lattice planes (002) took three different values of 3.36 Å, 3.43 Å and 3.45 Å, the carbon material also had a graphite structure having three different crystallinities in one particle, and the length (Lc) of a crystallite in the direction of the c axis was 800 Å in a portion having high crystallinity and was 50 Å and 30 Å in portions having low crystallinities.

### (Embodiment 9) (not invention)

In the present embodiment, a non-aqueous electrolyte secondary battery was fabricated in the same manner as that in the above-mentioned embodiment 5 except that in obtaining a carbon material used for a negative electrode, a carbide of phenol resin and a carbide of polyvinyl chloride were mixed in the weight ratio of 3 : 1, a mixture obtained was heat-treated for one hour at a temperature of 2800°C in a nitrogen atmosphere under atmospheric pressure using an electric furnace, and a carbon material thus obtained was used for a negative electrode in the production of the negative electrode in the non-aqueous electrolyte secondary battery in the embodiment 5.

The above-mentioned carbon material was analyzed by an X-ray diffraction method in the same manner as that in the embodiment 5. In this case, spacing (d₀₀₂) of lattice planes (002) took three different values of 3.36 Å, 3.40 Å and 3.43 Å, the carbon material had a graphite structure having three different crystallinities in one particle, and the length (Lc) of a crystallite in the direction of the c axis was 950 Å in a portion having high crystallinity and was 70 Å and 50 Å in portions having low crystallinities.

### (Embodiment 10) (not invention)

In the present embodiment, a non-aqueous electrolyte secondary battery was fabricated in the same manner as that in the above-mentioned embodiment 5 except that in obtaining a carbon material used for a negative electrode, natural graphite and a carbide of polyvinyl chloride were mixed in the weight ratio of 3 : 1, a mixture obtained was heat-treated for one hour at a temperature of 2800°C in a nitrogen atmosphere under atmospheric pressure using an electric furnace, and a carbon material thus obtained was used for a negative electrode in the production of the negative electrode in the non-aqueous electrolyte secondary battery in the embodiment 5.

The above-mentioned carbon material was analyzed by an X-ray diffraction method in the same manner as that in the embodiment 5. In this case, spacing (d₀₀₂) of lattice planes (002) took three different values of 3.35 Å, 3.36 Å and 3.43 Å, the carbon material has a graphite structure having three different crystallinities in one particle, and the length (Lc) of a crystallite in the direction of the c axis was 960 Å in a portion having high crystallinity and was 75 Å and 45 Å in portions having low crystallinities.

### (Embodiment 11) (not invention)

In the present embodiment, a non-aqueous electrolyte secondary battery was fabricated in the same manner as that in the above-mentioned embodiment 5 except that in obtaining a carbon material used for a negative electrode, coal pitch and a carbide of polyvinyl chloride were mixed in the weight ratio of 9 : 1, a mixture obtained was heat-treated for ten hours at a temperature of 2800°C in a nitrogen atmosphere under atmospheric pressure using an electric furnace, and a carbon material thus obtained was used for a negative electrode in the production of the negative electrode in the non-aqueous electrolyte secondary battery in the embodiment 5.

The above-mentioned carbon material was analyzed by an X-ray diffraction method in the same manner as that in the embodiment 5. In this case, spacing (d₀₀₂) of lattice planes (002) took two different values of 3.36 Å and 3.43 Å, the carbon material had a graphite structure having two different crystallinities in one particle, and the length (Lc) of a crystallite in the direction of the c axis was 1000 Å in a portion having high crystallinity and was 55 Å in portions having low crystallinities.

### (Comparative Example 17)

In the comparative example, a non-aqueous electrolyte secondary battery was fabricated in the same manner as that in the above-mentioned embodiment 5 except that natural graphite was used as a carbon material used for a negative electrode in the production of the negative electrode in the non-aqueous electrolyte secondary battery in the embodiment 5. In the natural graphite used for the negative electrode, spacing (d₀₀₂) of lattice planes (002) was 3.35 Å, and the length (Lc) of a crystallite in the direction of the c axis was not less than 1000 Å.

### (Comparative Example 18)

In the comparative example, a non-aqueous electrolyte secondary battery was fabricated in the same manner as that in the above-mentioned embodiment 5 except that artificial graphite obtained by heat-treating coal coke for ten hours at a temperature of 2800°C in a nitrogen atmosphere was used as a carbon material used for a negative electrode in the production of the negative electrode in the non-aqueous electrolyte secondary battery in the embodiment 5. In the artificial graphite used for the negative electrode, spacing (d₀₀₂) of lattice planes (002) was 3.36 Å, and the length (Lc) of a crystallite in the direction of the c axis was 800 Å.

### (Comparative Example 19)

In the comparative example, a non-aqueous electrolyte secondary battery was fabricated in the same manner as that in the above-mentioned embodiment 5 except that a carbon material obtained by heat-treating coal coke for ten hours at a temperature of 1200°C in a nitrogen atmosphere under atmospheric pressure was used as a carbon material used for a negative electrode in the production of the negative electrode in the non-aqueous electrolyte secondary battery in the embodiment 5. In the carbon material, spacing (d₀₀₂) of lattice planes (002) was 3.40 Å, and the length (Lc) of a crystallite in the direction of the c axis was 20 Å.

### (Comparative Example 20)

In the comparative example, a non-aqueous electrolyte secondary battery was fabricated in the same manner as that in the above-mentioned embodiment 5 except that a carbon material obtained by heat-treating a carbide of polyvinylidene chloride at a temperature of 1500°C in a nitrogen atmosphere under atmospheric pressure was used as a carbon material used for a negative electrode in the production of the negative electrode in the non-aqueous electrolyte secondary battery in the embodiment 5. In the carbon material, spacing (d₀₀₂) of lattice planes (002) was 3.43 Å, and the length (Lc) of a crystallite in the direction of the c axis was 10 Å.

### (Comparative Example 21)

In the comparative example, a non-aqueous electrolyte secondary battery was fabricated in the same manner as that in the above-mentioned embodiment 5 except that a carbon material obtained by heat-treating a carbide of phenol resin at a temperature of 1500°C in a nitrogen atmosphere under atmospheric pressure was used as a carbon material used for a negative electrode in the production of the negative electrode in the non-aqueous electrolyte secondary battery in the embodiment 5. In the carbon material, spacing (d₀₀₂) of lattice planes (002) was 3.45 Å, and the length (Lc) of a crystallite in the direction of the c axis was 15 Å.

### (Comparative Example 22)

In the comparative example, a non-aqueous electrolyte secondary battery was fabricated in the same manner as that in the above-mentioned embodiment 5 except that a carbon material obtained by mixing coal coke obtained by heat treatment at a temperature of 1200°C under a nitrogen atmosphere and natural graphite in the weight ratio of 1 : 4 was used as a carbon material used for a negative electrode in the production of the negative electrode in the non-aqueous electrolyte secondary battery in the embodiment 5. In the carbon material, spacing (d₀₀₂) of lattice planes (002) in the coal coke was 3.40 Å, and spacing (d₀₀₂) of lattice planes (002) in the natural graphite was 3.35 Å, and the length (Lc) of a crystallite in the direction of the c axis was 15 Å in the coal coke and was not less than 1000 Å in the natural graphite.

### (Comparative Example 23)

In the comparative example, a non-aqueous electrolyte secondary battery was fabricated in the same manner as that in the above-mentioned embodiment 5 except that a carbon material obtained by mixing powder of natural graphite and a carbide of 3, 5-dimethyl phenol formaldehyde resin in the weight ratio of 95 : 5, then calcining a mixture obtained for two hours at a temperature of 1000°C in a nitrogen atmosphere, and coating the surface of the natural graphite with the carbide of 3, 5-dimethyl phenol formaldehyde resin was used as a carbon material used for a negative electrode in the production of the negative electrode in the non-aqueous electrolyte secondary battery in the embodiment 5. In the carbon material, spacing (d₀₀₂) of lattice planes (002) in the carbide of 3, 5-dimethyl phenol formaldehyde resin on its surface was 3.47 Å, and spacing (d₀₀₂) of lattice planes (002) in the natural graphite was 3.35 Å, and the length (Lc) of a crystallite in the direction of the c axis was 7 Å in the carbide of 3, 5-dimethyl phenol formaldehyde resin and was not less than 1000 Å in the natural graphite.

Each of the non-aqueous electrolyte secondary batteries in the embodiments 5 to 11 and the comparative examples 17 to 23 fabricated in the above-mentioned manner was charged to a final charge voltage of 4.2 V at a charging current of 100 mA, while being discharged to a final discharge voltage of 2.7 V at a discharge current of 100 mA. 500 cycle tests were carried out with charge and discharge taken as one cycle, to measure a discharge capacity (mAh) after 500 cycles, and find the cycle degradation rate (%) per one cycle. The results are shown in the following Table 8. All initial discharge capacities in the non-aqueous electrolyte secondary batteries in the embodiments 5 to 11 and the comparative examples 17 to 23 fabricated in the above-mentioned manner were 500 mAh as shown in Table 8.

**Table 8**

| | initial discharge capacity (mAh) | discharge capacity after 500 cycles (mAh) | cycle degradation rate (%) |
|---|---|---|---|
| embodiment 5 | 500 | 450 | 0.02 |
| embodiment 6 | 500 | 450 | 0.02 |
| embodiment 7 | 500 | 425 | 0.03 |
| embodiment 8 | 500 | 475 | 0.01 |
| embodiment 9 | 500 | 450 | 0.02 |
| embodiment 10 | 500 | 450 | 0.02 |
| embodiment 11 | 500 | 425 | 0.03 |
| comparative example 17 | 500 | 125 | 0.15 |
| comparative example 18 | 500 | 75 | 0.17 |
| comparative example 19 | 500 | 50 | 0.18 |
| comparative example 20 | 500 | 25 | 0.19 |
| comparative example 21 | 500 | 125 | 0.15 |
| comparative example 22 | 500 | 275 | 0.09 |
| comparative example 23 | 500 | 250 | 0.10 |

As a result, when the carbon material having a multi-phase graphite structure having two or more different crystallinities in one particle was used as a negative electrode material as shown in each of the foregoing embodiments 5 to 11, the decrease in the discharge capacity after 500 cycles was small, and the cycle degradation rate was very low. On the other hand, in each of the non-aqueous electrolyte secondary batteries in the comparative examples 17 to 23, the discharge capacity after 500 cycles was significantly decreased, and the cycle degradation rate was very high.

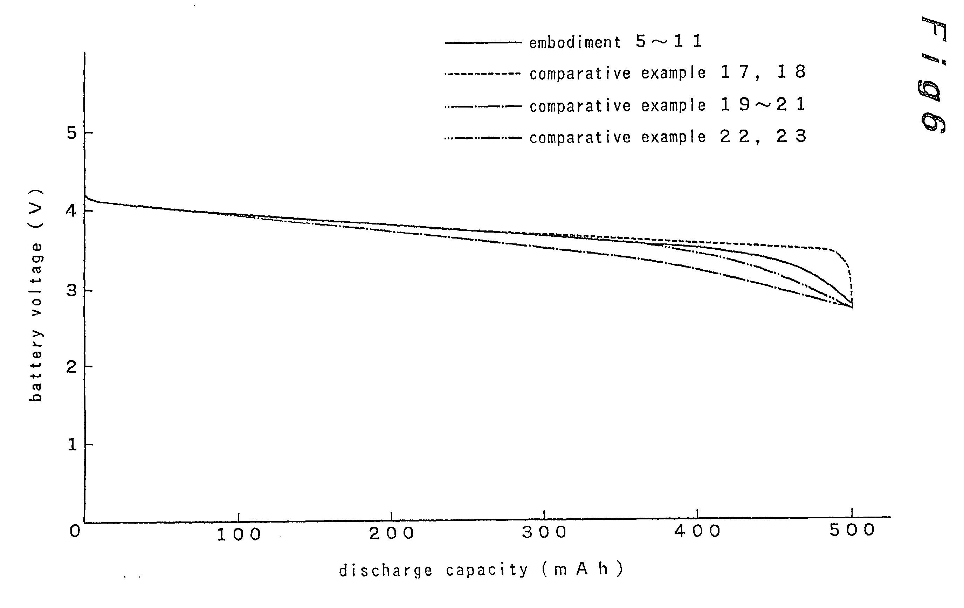

With respect to each of the non-aqueous electrolyte secondary batteries in the embodiments 5 to 11 and the comparative examples 17 to 23, the relationship between a discharge capacity and a battery voltage was found, to examine discharge characteristics in the non-aqueous electrolyte secondary battery. The results are shown in Fig. 6.

As a result, in each of the non-aqueous electrolyte secondary batteries in the embodiments 5 to 11, the battery voltage was maintained in a certain flat state to the end of the discharge, and the decrease in the battery voltage at the end of the discharge was gradual.

On the other hand, in each of the non-aqueous electrolyte secondary batteries in the comparative examples 17 and 18, the battery voltage was flat and stable to the end of the discharge. However, the battery voltage was rapidly reduced at the end of the discharge. Consequently, it was considered that the carbon material and the non-aqueous electrolytic solution at the negative electrode reacted with each other, so that the non-aqueous electrolytic solution was decomposed, resulting in degraded cycle characteristics.

Furthermore, in each of the non-aqueous electrolyte secondary batteries in the comparative examples 19 to 21, the battery voltage was gradually reduced as the discharge capacity was decreased, so that a stable battery voltage was not obtained. On the other hand, in each of the non-aqueous electrolyte secondary batteries in the comparative examples 22 and 23, the same discharge characteristics as those in the non-aqueous electrolyte secondary batteries in the embodiments 5 to 11 were exhibited, while the cycle characteristics were much worse than those in the embodiments 5 to 11. The reason for this is conceivably that the non-aqueous electrolyte secondary battery in the comparative example 22 does not have a multi-phase graphite structure, unlike the non-aqueous electrolyte secondary batteries in the embodiments 5 to 11, because carbon having low crystallinity and carbon having high crystallinity are only mixed with each other, so that a high-potential portion partially occurs at the negative electrode at the end of the discharge, whereby the non-aqueous electrolytic solution is decomposed upon partially reacting with the negative electrode. Further, the reason for this is conceivably that the non-aqueous electrolyte secondary battery in the comparative example 23 has a structure in which the surface of carbon having high crystallinity is coated with carbon having low crystallinity, and the surface thereof has a multi-phase structure, while the interior thereof has a single-phase structure, whereby the non-aqueous electrolytic solution is decomposed upon partially reacting with the negative electrode by elimination of the carbon having low crystallinity, for example, at the end of the discharge.

Although the present invention has been described and illustrated in detail, it is clearly understood that the same is by way of illustration and example only and is not to be taken by way of limitation, the scope of the present invention being limited only by the terms of the appended claims.

## Claims

1. A non-aqueous electrolyte battery comprising a positive electrode (1), a negative electrode (2) using a carbon material, and a non-aqueous electrolytic solution, wherein
the carbon material is composed of a core and a surface layer, the core is coated with the surface layer, the core is composed of graphitized carbon in which spacing (d₀₀₂) of lattice planes (002) is in the range of 3.35 to 3.39Å, and the surface layer is composed of a calcined product of an organic substance comprised of carbon containing sulfur atoms.

2. The non-aqueous electrolyte battery according to claim 1, wherein
the amount of the calcined product of the organic substance is in the range of 0.1 to 50 % by weight per the total amount of the graphitized carbon and the calcined product of the organic substance.

3. The non-aqueous electrolyte battery according to claim 1, wherein
the amount of the calcined product of the organic substance is in the range of 5 to 40 % by weight per the total amount of the graphitized carbon and the calcined product of the organic substance.

4. The non-aqueous electrolyte battery according to claim 1, wherein
the amount of the calcined product of the organic substance is in the range of 15 to 25 % by weight per the total amount of the graphitized carbon and the calcined product of the organic substance.

5. The non-aqueous electrolyte battery according to claim 1, wherein
the ratio of the number of the sulfur atoms to the number of carbon atoms in said calcined product of the organic substance is in the range of 0.01 to 20 %.

6. The non-aqueous electrolyte battery according to claim 1, wherein
the ratio of the number of the sulfur atoms to the number of carbon atoms in said calcined product of the organic substance is in the range of 1 to 10 %.

7. The non-aqueous electrolyte battery according to claim 1, wherein
the ratio of the number of the sulfur atoms to the number of carbon atoms in said calcined product of the organic substance is in the range of 5 to 7 %.

8. The non-aqueous electrolyte battery according to claim 1, wherein
said calcined product of the organic substance composed of carbon containing sulfur atoms is composed of one obtained by calcining and graphitizing a pyrolytic product of an organic substance containing sulfur at temperatures in the range of 2700 to 3000 °C.

## Patentansprüche

1. Batterie mit nichtwässrigen Elektrolyten mit einer positiven Elektrode (1), einer negativen Elektrode (2), die ein Kohlenstoffmaterial verwendet, und einer nicht wässrigen Elektrolytlösung, wobei das Kohlenstoffmaterial aus einem Kern und einer Oberflächenschicht zusammengesetzt ist, der Kern mit der Oberflächenschicht bedeckt ist, der Kern aus graphitisiertem Kohlenstoff zusammengesetzt ist, bei der der Abstand (d₀₀₂) der Gitterebenen (002) im Bereich von 3,35 bis 3,39Å liegt, und die Oberflächenschicht aus einem kalzinierten Produkt einer organischen Substanz zusammengesetzt ist, die Schwefelatome enthaltenden Kohlenstoff aufweist.

2. Batterie mit nichtwässrigen Elektrolyten nach Anspruch 1, wobei der Anteil des kalzinierten Produktes der organischen Substanz im Bereich von 0,1 bis 50 Gewichtsprozenten pro Totalanteil des graphitisierten Kohlenstoffes und des kalzinierten Produkts der organischen Substanz liegt.

3. Batterie mit nichtwässrigen Elektrolyten nach Anspruch 1, wobei der Anteil des kalzinierten Produktes der organischen Substanz im Bereich von 5 bis 40 Gewichtsprozenten pro Totalanteil des graphitisierten Kohlenstoffes und des kalzinierten Produkts der organischen Substanz liegt.

4. Batterie mit nichtwässrigen Elektrolyten nach Anspruch 1, wobei der Anteil des kalzinierten Produktes der organischen Substanz im Bereich von 15 bis 25 Gewichtsprozenten pro Totalanteil des graphitisierten Kohlenstoffes und des kalzinierten Produktes der organischen Substanz liegt.

5. Batterie mit nichtwässrigen Elektrolyten nach Anspruch 1, wobei das Verhältnis der Anzahl der Schwefelatome zu der Anzahl der Kohlenstoffatome in dem kalzinierten Produkt der organischen Substanz im Bereich von 0,01 bis 20 % liegt.

6. Batterie mit nichtwässrigen Elektrolyten nach Anspruch 1, wobei das Verhältnis der Anzahl der Schwefelatome zur Anzahl der Kohlenstoffatome in dem kalzinierten Produkt der organischen Substanz im Bereich von 1 bis 10 % liegt.

7. Batterie mit nichtwässrigen Elektrolyten nach Anspruch 1, wobei das Verhältnis der Anzahl der Schwefelatome zur Anzahl der Kohlenstoffatome in dem kalzinierten Produkt der organischen Substanz im Bereich von 5 bis 7 % liegt.

8. Batterie mit nichtwässrigen Elektrolyten nach Anspruch 1, wobei das kalzinierte Produkt der organischen Substanz, das aus Schwefelatomen enthaltendem Kohlenstoff zusammengesetzt ist, zusammengesetzt ist aus einem, das erhalten wird durch Kalzinieren und Graphitisieren eines pyrolytischen Produktes einer organischen Substanz, die Schwefel enthält, bei Temperaturen im Bereich von 2700 bis 3000°C.

## Revendications

1. Batterie à électrolyte non-aqueux comprenant une électrode positive (1), une électrode négative (2) utilisant un matériau de carbone, et une solution électrolytique non aqueuse, dans laquelle
le matériau de carbone est composé d'un noyau et d'une couche de surface, le noyau est revêtu de la couche de surface, le noyau est composé de carbone graphitisé dans lequel l'espacement (d₀₀₂) des plans réticulaires (002) est dans la plage de 3,35 à 3,39 Å, et la couche de surface est composée d'un produit calciné d'une substance organique comportant du carbone contenant des atomes de soufre.

2. Batterie à électrolyte non-aqueux selon la revendication 1, dans laquelle
la quantité du produit calciné de la substance organique est dans la plage de 0,1 à 50 % en poids pour la quantité totale du carbone graphitisé et du produit calciné de la substance organique.

3. Batterie à électrolyte non-aqueux selon la revendication 1, dans laquelle
la quantité du produit calciné de la substance organique est dans la plage de 5 à 40 % en poids pour la quantité totale du carbone graphitisé et du produit calciné de la substance organique.

4. Batterie à électrolyte non-aqueux selon la revendication 1, dans laquelle
la quantité du produit calciné de la substance organique est dans la plage de 15 à 25 % en poids pour la quantité totale du carbone graphitisé et du produit calciné de la substance organique.

5. Batterie à électrolyte non-aqueux selon la revendication 1, dans laquelle
le rapport du nombre des atomes de soufre sur le nombre des atomes de carbone dans ledit produit calciné de la substance organique est dans la plage de 0,01 à 20 %.

6. Batterie à électrolyte non-aqueux selon la revendication 1, dans laquelle
le rapport du nombre des atomes de soufre sur le nombre des atomes de carbone dans ledit produit calciné de la substance organique est dans la plage de 1 à 10 %.

7. Batterie à électrolyte non-aqueux selon la revendication 1, dans laquelle
le rapport du nombre des atomes de soufre sur le nombre des atomes de carbone dans ledit produit calciné de la substance organique est dans la plage de 5 à 7 %.

8. Batterie à électrolyte non-aqueux selon la revendication 1, dans laquelle
ledit produit calciné de la substance organique composé de carbone contenant des atomes de soufre est composé d'un carbone obtenu en calcinant et graphitisant un produit pyrolytique d'une substance organique contenant du soufre à des températures dans la plage de 2 700 à 3 000 °C.
